# EUROPEAN PATENT SPECIFICATION

(11) **EP 1 712 793 B1**
(45) Date of publication and mention of the grant of the patent: **17.12.2008**
(21) Application number: 05709543.2
(22) Date of filing: 01.02.2005
(51) Int. Cl.: F04B 39/04, F04B 39/00, F04B 39/14, F16B 4/00, F04C 23/00, B21D 39/03

(54) **COMPRESSOR AND METHOD OF PLATE INSTALLATION**
KOMPRESSOR UND VERFAHREN ZUR PLATTENINSTALLATION
COMPRESSEUR ET PROCEDE D INSTALLATION DE PLAQUE

(30) Priority: 06.02.2004 JP 2004030261
(43) Date of publication of application: 18.10.2006
(73) Proprietor: DAIKIN INDUSTRIES, LTD., Osaka-shi, Osaka 530-8323 (JP)
(72) Inventor: AMANO, R., c/o Shiga-seisakusho of Daikin Ind. Ltd, Kusatsu-shi, Shiga 525-0044 (JP)
(74) Representative: Goddar, Heinz J.
(86) International application number: PCT/JP2005/001397
(87) International publication number: WO 2005/075829

(56) References cited:
- EP-A- 0 150 955
- EP-A- 1 160 956
- EP-A1- 0 698 736
- EP-A2- 0 622 885
- WO-A-03/014531
- JP-A- 60 090 995
- JP-U- 51 070 091
- JP-U- 58 063 407
- JP-U- 62 156 170
- JP-Y1- 45 026 515
- US-A- 3 828 517

## Description

### TECHNICAL FIELD

The present invention relates to a compressor according to the first part of claim 1.

### BACKGROUND ART

A hermetic type rotary compressor is used for an outdoor unit of an air conditioner, the hermetic type rotary compressor having a closed container, a compressor element section housed in a lower portion of the closed container, and an electric motor element section housed in an upper portion of the closed container. In this type of compressor, however, unless lubrication oil is sufficiently separated from refrigerant gas inside the closed container, the refrigerant gas containing the lubrication oil might flow out to an external circuit. Thereby, cooling efficiency is not only degraded, but also the compression elements are not smoothly operated because of shortage of the lubrication oil which is contained in an oil receiver provided on the bottom of the closed container. Therefore, it was necessary to take steps to separate only the lubrication oil from a mixture of the refrigerant gas and the lubrication oil, in order not to flow the mixture out from a discharge section provided on an upper lid section of the closed container. Thereby, the lubrication oil is returned to the lower portion of the container to circulate the lubrication oil inside the closed container.

For this reason, the compressor has been conventionally provided with an oil separation plate (see JP H11-107967 A, for example). Particularly, an electric motor element section is provided with a rotor and a stator, which is disposed on the outer peripheral side of the rotor, such that the oil separation plate is installed on the upper end surface of the rotor. Accordingly, the mixture of the refrigerant gas and the lubrication oil, when rising from the lower side of the closed container, comes into contact with the oil separation plate. Then, the mixture is radially dispersed by centrifugal force of the oil separation plate since the oil separation plate is rotating together with the rotor. The dispersed mixture falls on a coil wound around a core of the stator. By this, oil content (oil particles) is attached to the side of the coil so that the oil content (oil particles) and the refrigerant gas (vapor) are separated. The separated refrigerant gas is discharged out of the compressor through a gas discharge pipe provided above the closed container (casing). The oil content attached to the coil side falls down the stator to returns to the oil receiver on the bottom of the closed container.

In some cases, an end plate made of a nonmagnetic die casting alloy is installed on the upper end surface of the rotor for the purpose of preventing a magnet from jumping out and for blocking magnetic fields. In such cases, the oil separation plate needs to be installed on the end plate. Therefore, in order to fix the oil separation plate onto the end plate mounted on the upper end surface of the rotor, conventionally, the end plate is provided with projections, and also the oil separation plate is provided with through holes. The oil separation plate is installed on the end plate by fitting the projections of the end plate into the through holes of the oil separation plate, and thereafter crushing (so-called caulking) parts of the projections that project from the through holes of the oil separation plate.

EP 0 622 885 A2 discloses a compressor according to the first part of claim 1 with the exception that the disclosed projection does not comprise a recess on an upper face of the projection.

EP 0 150 955 A2 provides a teaching how to crush/caulk a rivit or caulking pin in a manner to obtain a reliable deformation. A similar teaching is found in WO 03/014531A and US 3,828,517, US 4,007,540.

### DISCLOSURE OF THE INVENTION

### PROBLEMS TO BE SOLVED BY THE INVENTION

However, installation of the oil separation plate according to known methods may lead to a failure such as breaking, chipping off and cracking in the projections. The failure is caused by such a large compression force as exceeds the fracture strength of the projection as the result of acting upon each projection of the end plate during caulking. The failure attributes to a lower ductility and fracture strength of the end plate projection made of a nonmagnetic die casting alloy than a commonly-used caulking rivet made of iron. Moreover, it is difficult to change the material of the end plate due to the structure of the electric motor element section in the compressor. Thus, the manufacturing cost is increased by the failure such as breaking or cracking generated on the projections during manufacturing of the compressor because the oil separation plate should be uninstalled and the end plate fixed onto the rotor should be replaced. Moreover, if the failure is overlooked in manufacturing the hermetic type rotary compressor, there is a possibility that the projection on the end plate might be damaged in use to cause the oil separation plate to come off in the closed container. If the oil separation plate comes off, the compressor should be repaired to deteriorate reliability of the product.

An object of the present invention is to provide, for solving the conventional problems, a highly reliable compressor which enables an oil separation plate to be reliably installed on a rotor side so as not to come off and which has a function of positively separating lubrication oil and refrigerant gas.

### MEANS FOR RESOLVING THE PROBLEMS

To achieve the above-stated objects, the present invention provides a compressor according to claim 1.

The recess is provided on the upper face of the projection, which allows the projected part of the projection to be deformed at the time of the crushing. Therefore, the recess makes it possible to reduce radial and axial stresses imposed on the projection so as to disperse the stresses. Thereby, fracture of the projection is prevented.

Thus, prevention of the projection fracture by means of crushing allows reduction in labor and cost during installation of the oil separation plate. Further, it is also possible to enhance reliability of the compressor by preventing a quality trouble such as coming-off of the oil separation plate, which trouble is caused by failure in finding a fracture of the projection in the installation step of the oil separation plate.

The projection is partly crushed to remain a portion of the recess.

Crushing is executed so as not completely disappear a recess space provided in the projection. This makes it possible to more reliably prevent fracture of the projection. Particularly, the projection may be fractured if the crushing is continued after completely crushing the recess on the projection. This is because the crushing becomes equal to normal compressing after continuing the crushing operation (pressuring operation). For this reason, crushing is stopped before such fracture occurs to prevent fracture. Even if a portion of the recess remains, no damage is given to integration between the oil separation plate and the end plate, the integration being attained by crushing the projection.

Thus, remaining a smaller space in the recess leads to more reliable prevention of the fracture in the projection. Therefore, as described above, this can reduce labor and costs in manufacturing and enhance the reliability of the compressor.

The recess on the projection has a cone shape whose diameter gradually decreases downward.

When crushing operation is executed with a pressing machine or the like, the recess formed in a cone shape makes it possible to gradually increase a contact area between the pressing machine and the projection, as compression of the projection progresses in the crushing operation. The gradual increase of the contact area leads to dispersion of axial tension. At the time of pressing, a peripheral wall around the recess is evenly deformed toward both the inside and the outside in radial direction of the projection. Thus, the projection can take a shape which prohibits unnatural deformation or concentration of stress to effectively prevent the fracture of the projection.

Thus, by making the recess having a cone shape, the projection can take a shape which does not cause unnatural deformation, to effectively prevent the fracture of the projection. In addition, since the cone shape is simple, it can easily be formed during die casting of the end plate, or by a cutting process or the like after the die casting. Therefore, it becomes possible to enhance the reliability of the compressor while keeping the manufacturing costs way down.

A material of the projection is die casting aluminum alloy.

Although the projection is made of die casting aluminum alloy, the die casting aluminum alloy is inferior in fracture strength and ductility to forgings such as steel rivets. Therefore, the above-described fracture prevention measures is required for the crushing operation.

As described above, the end plate including the projection is made of the aluminum die casting alloy which is light-weighted and nonmagnetic. So, structurally this alloy is an optimum material for the end plate fixed onto the rotor. However, since the die casting aluminum alloy is inferior in ductility and fracture strength to other metals such as steel used in caulking rivets, any measures is necessary for prevention of the projection fracture at the time of the crushing (caulking) operation. Thus, effectiveness of the above-stated fracture prevention measures becomes very prominent for the projection.

Also described is a method of plate installation, comprising the steps of: mounting a plate member on a supporting base plate by fitting a projection of the supporting base plate into a through hole of the plate member, wherein the supporting base plate has a projection having a recess on an upper face of the projection and the supporting base plate is made of aluminum die casing alloy, to project a top end part of the projection from the through hole; and crushing the projected part of the projection from the through hole, except for a portion of the recess on the projection, by applying a downward pressing force to the projected part so as to integrate the plate member with the supporting base plate.

This method of plate installation is applicable to various apparatuses other than the compressor. Namely, the method of plate installation may be used as a method for installing a plate member on a supporting base plate having a projection made of die casting aluminum alloy in some apparatuses other than the compressor. In this case, the end plate having a projection in the compressor corresponds to the supporting base plate. Also, the oil separation plate having the through hole in the compressor corresponds to the plate member. The projection and the recess provided on the upper face of the projection in the compressor correspond to the projection of the supporting base plate and a recess provided on the upper face of the projection, respectively. Further, the through hole in the end plate of the compressor corresponds to a through hole of the supporting base plate. Consequently, according to this method of plate installation, the recess is provided on the upper face of the projection, which makes it possible to reduces radial and axial stresses imposed on the projection at the time of crushing, and therefore to disperse the stresses and to prevent fracture of the projection. In addition, crushing is executed in such a way that a space of the recess provided in the projection is not completely crushed, which makes it possible to more reliably prevent the fracture of the projection.

Thus, the fracture of the projection due to crushing can be prevented even if the projection is made of die casting aluminum alloy. This allows reduction in labor and cost in installing the plate member. Moreover, it becomes possible to prevent such a quality trouble that the fracture of the projection 3 cannot be found out in the installation step and the damage of the projection progresses to cause the plate member to come off after components (various components having the supporting base plate and other plate members in an integrated state) are brought to the commercial state, and therefore it becomes possible to enhance the reliability of the components.

### BRIEF DESCRIPTION OF THE DRAWINGS

Fig. 1 is a cross sectional view of a compressor according to the present invention;
Fig. 2 is an enlarged cross sectional view of a primary part of an electric motor element section in the compressor according to the present invention;
Fig. 3 is a plane view of an end plate to be installed on the compressor according to the present invention;
Fig. 4 is a cross sectional view of the end plate taken along a line A-A of Fig. 3;
Fig. 5 is an enlarged cross sectional view of a projection;
Fig. 6 is a plane view of an oil separation plate to be installed on the compressor according to the present invention; and
Fig. 7 is an enlarged cross sectional view of a modified example of the projection.

### BEST MODE FOR CARRYING OUT THE INVENTION

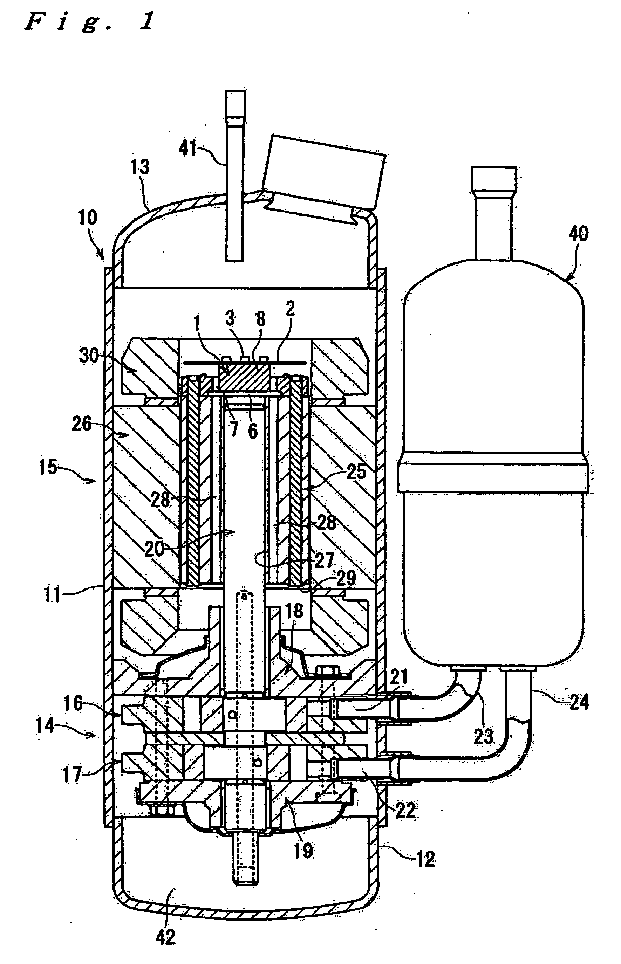

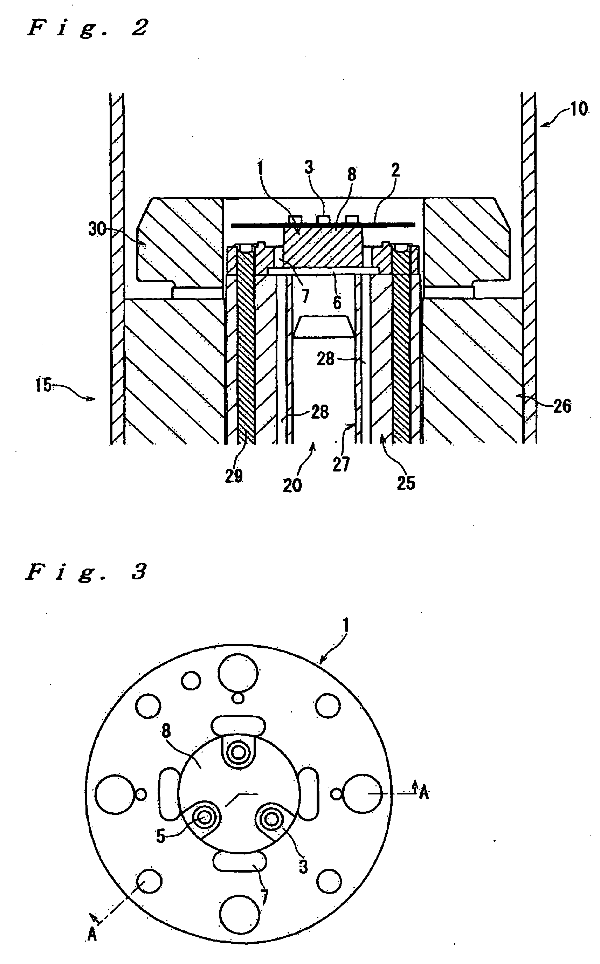

Specific embodiments of a compressor according to the present invention will now be described in detail with reference to the drawings. Fig. 1 shows a cross sectional view of the compressor. The compressor is a hermetic type rotary compressor composed of a closed container 10, a compressor element section 14 housed on a lower portion side of the closed container 10, and an electric motor element section 15 housed on an upper portion side of the closed container 10. Fig. 2 is an enlarged cross sectional view showing the primary part of the electric motor element section 15. As shown in Fig. 1, the closed container 10 is composed of a cylindrical barrel section 11, a bottom member 12 connected to the lower portion of the cylindrical barrel section 11, and an upper lid member 13 connected to the upper portion of the barrel section 11. The compressor element section 14 has an upper cylinder 16, a lower cylinder 17, and their support members 18, 19. A rotation shaft 20 is rotatably inserted in the closed container 10 such that the rotation shaft 20 extends in the vertical axial direction of the closed container 10. Moreover, suction ports 21, 22 are respectively formed in the upper and lower cylinders 16, 17. The upper and lower cylinders 16, 17 are connected to suction pipes 23, 24, through which refrigerant gas is supplied to the respective cylinders 16, 17 from an accumulator 40.

The electric motor element section 15 has a rotor 25 and a stator 26, wherein the rotation shaft 20 is fitted into and secured to the rotor 25, and wherein the stator 26 is provided on the outer peripheral side of the rotor 25. The rotor 25 is provided with a plurality of through holes 28 which extend vertically along a central axial hole 27 of the rotor 25. The mixture of lubrication oil and refrigerant gas flows into the through holes 28 from lower openings thereof and moves toward an upper portion of the closed container 10 to smoothly drive the electric motor element section 15 and the compressor element section 14.

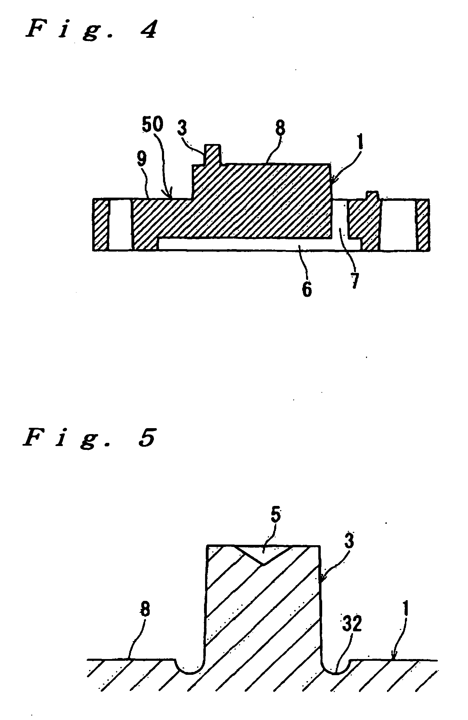

As shown in Figs. 1 and 2, an oil separation plate 2 is provided on the upper end face of the rotor 25 via an end plate 1 made of die casting aluminum alloy. The end plate 1 is installed on the rotor 25 by caulking top ends of rivets 29 which are each inserted into the through holes provided in the rotor 25 from the lower portion thereof, and whose top ends project from the upper portion of through holes provided in the end plate 1, where the through holes of the rotor 25 are communicated with the through holes of the end plate 1 in common. Fig. 3 shows a plane view of the end plate 1. Fig. 4 shows a cross sectional view taken along a line A-A of Fig. 3. The end plate 1, which covers the upper end face of the rotor 25, has a main section 50 and a projection 3 that protrudes from the main section 50. The main section 50 has a disc-like base section 9 and an installation section 8 which is provided on a center portion of the upper face of the disc-like base section 9. The oil separation plate 2 is mounted on the upper face of the installation section 8, as shown in Figs. 1 and 2. The end plate 1 has a recess hollow section 6 on a lower face of the end plate 1, wherein the recess hollow section 6 is connected to through holes 28 provided in the rotor 25. In addition, four through holes 7, which are communicated with the recess hollow section 6, are provided in the base section 9 of the end plate 1. The end plate 1 has functions to prevent a magnet of the rotor 25 from jumping out and to block any magnetic field.

Accordingly, the mixture rises through the through holes 28 provided in the rotor 25 and flows into the recess hollow section 6 of the end plate 1 via the upper openings of the through holes 28. Then, the mixture flows from the recess hollow section 6 via its lower opening into the through holes 7 provided in the end plate 1. Then, the mixture is discharged upward from the upper openings of the through holes 7 and collides with the oil separation plate 2. Just after colliding with the oil separation plate 2, the mixture is radially dispersed by centrifugal force of the oil separation plate 2 because the oil separation plate 2 is rotating together with the rotor 25. Thereby, the mixture is sprayed onto a coil 30 provided above the stator 26. The setting height of the oil separation plate 2 is determined by optimally designing the height of the installation section 8 in such a way that the mixture flying from the oil separation plate 2 is reliably sprayed onto the coil 30. Thereby, lubrication oil particles are temporarily attached to the side of the coil 30, so that the lubrication oil and the refrigerant gas are separated. The separated refrigerant gas is discharged to the outside from a discharge section 41 provided in the closed container 10. The lubrication oil temporarily attached to the coil flows down the stator 26 and returns to an oil receiver 42 located at the lower portion of the closed container 10. Thus, the refrigerant gas and the lubrication oil are stably separated by installing the oil separation plate 2 on the end plate 1.

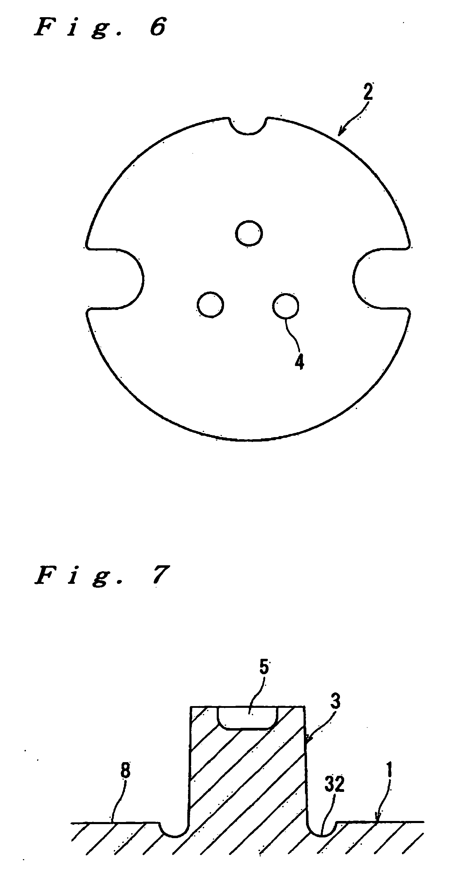

General description has been given of the compressor structure and the method for separating the lubrication oil and the refrigerant gas with the oil separation plate 2, which the present invention is applied to. Hereinafter, detailed description is given of a method for installing the oil separation plate 2. Specifically, description is given in detail of a plate installation method for mounting the oil separation plate 2 on the end plate 1 having a projection 3 made of die casting aluminum alloy. As shown in Figs. 3 and 4, the projections 3 are provided at three locations on the installation section 8 of the end plate 1. As shown in Fig. 6, through holes 4 are provided at three locations in the oil separation plate 2 so that the projections 3 of the installation section 8 are fitted into the through holes 4. The projection 3 is provided with a cone-shaped recess 5 on the upper face of the projection 3, wherein the cone-shaped recess 5 upward increases in diameter gradually, as shown in Fig. 5. As described later, the recess 5 allows a projected part of the projection 3 to be deformed when caulking the projected part of the projection 3. An opening diameter of the recess 5 is about 50% of the outer diameter of the projection 3 having a short column shape. A depth of the recess 5 is about 10 to 15% of the outer diameter of the projection 3. The end plate 1 is made of die casting aluminum alloy as described above. The recess 5 may be formed at the time of die casting of the end plate 1 or by a cutting process or the like after die-casting. Also, a circumferential groove 32 is provided around an outer circumference of the lower end of the projection 3.

The projections 3 are fitted into the through holes 4 of the oil separation plate 2, and then, projected parts of the projections 3, which project from the through holes 4, are crushed or caulked downward by a pressing machine or the like. Thereby, the projected part of the projection 3 that stands out from the through hole 4 is deformed to become larger in diameter than the through hole 4, by which the oil separation plate 2 is fixed onto the end plate 1. The projection 3 is caulked in such a way that the recess 5 is not completely crushed but a portion of the recess 5 is recognizably left. Specifically, pressing should be ended immediately before a space in the recess 5 is eliminated by deformation of the projection 3. In this case, it is difficult to recognize presence of the recess 5 during pressing operation. Therefore it is preferable to measure and determine a threshold stroke in a pressing machine by conducting experiments in advance, wherein the threshold stroke allows pressing while leaving part of the recess 5. This makes it possible to prevent increase of labor since caulking during installation of the oil separation plate 2 can be executed simply by mechanically repeating the pressing operation up to the threshold strokes of the pressing machine.

In this embodiment, thus, it becomes possible to prevent a fracture of the projection 3 such as a break or a crack by reducing and dispersing radial and axial stresses on the projection 3 because the recess 5, which is provided on the upper face of the projection 3, allows the projected part of the projection 3 to be deformed when crashing the projection 3. This allows reduction in labor and cost at the time of installing the oil separation plate 2. It is also possible to enhance reliability of the compressor by preventing a quality trouble such as coming-off of the oil separation plate, which trouble is caused by failure in finding a fracture of the projection 3 in the installation step of the oil separation plate 2. In the present embodiment, the recess 5 provided in the projection 3 is not completely crushed so as to remain a portion of the recess 5 without any damage. This makes it possible to more reliably prevent fracture of the projection 3. More specifically, complete crushing of the recess 5 in the projection 3 is equal to a normal compressing, and therefore, the projection 3 might be fractured if the crushing (pressurizing) operation is continued thereafter. For this reason, the pressuring operation is stopped to prevent the fracture before such a fracture occurs. Even if the recess 5 partly remains, the oil separation plate is effectively integrated with the end plate 1 by crushing part of the projection 13.

Moreover, the cone-shape recess 5 does not cause unnatural deformation in the projection 3 at the time of crushing thereof, which effectively prevents the projection 3 from being fractured. A cone is simple in shape, and therefore it can easily be formed during die-casting of the end plate 1 or by a cutting etc. after die-casting. Therefore, it becomes possible to not only enhance the reliability of the compressor but also keep the manufacturing costs low. In addition, although die casting aluminum alloy is used for a material of the projection 3, the projection 3 made of die casting aluminum alloy is inferior in fracture strength and ductility to a forged product such as a steel rivet, and therefore, the crushing operation requires any measure for preventing a fracture as described above.

Fig. 7 shows a modified example of the projection 3. In this case, the recess 5 formed on the projection 3 is a flat circular hole. An outer diameter of the recess 5 is also about 50% of the outer diameter of the projection 3, while a depth of the recess 5 is about 10 to 15% of the outer diameter of the projection 3. The recess 5 formed on the projection 3 has a round portion at the bottom corner of the recess 5 so as to disperse any stress all over the projection 3. In this case, a portion of the recess 5 also remains after crushing.

Thus, when the projection 3 shown in Fig. 7 is used, the projection 3 deforms, at the time of crushing, in such a way that its height decreases while its diameter increases as downward pressing is applied. Then, as the projection 3 is deformed, the diameter and depth of the recess 5 are decreased to make a space portion narrower. The recess 5 of a circular hole in the projection 3 shown in Fig. 7 has a larger volume than the cone-shaped recess 5 in the projection 3 as shown in Fig. 5. Also, since the recess 5 is a circular hole, a portion of the projection 3 having the recess 5 can be greatly deformed in the radial direction when the portion of the projection 3 is pressed. In the case of the projection 3 in Fig 7, therefore, the pressing machine can attain a larger stroke, which allows effective caulking without giving any substantial damage to the projection 3.

It should be noted that there is a higher possibility that the side wall of the recess 5 might be buckled or fractured in the case of the recess 5 having the shape shown in Fig. 7. This is because when the projection 3 is pressed, a load continuously concentrates on a cylindrical portion, that is, the side wall of the projection 3 surrounding the recess 5. Therefore, it is recommended to decrease the diameter of the recess 5, to increase the depth of the recess 5, and to round the inner corners of the recess 5 in order to deform the entire projection 3 having the recess 5, so that stress applied to the projection 3 is dispersed. As the result, those lead to more stabilized installation of the oil separation plate 2.

Description has been given to the specific embodiments of the compressor according to the present invention. However, the present invention is not limited to the embodiments disclosed above. It is possible to variously modify the embodiments within the scope of the invention. Specifically, it is optional to increase or decrease the number of the projections 3 of the end plate 1 and the corresponding number of the through holes 4 of the oil separation plate 2. In addition, the recess 5 may be formed in other various shapes such as a hemispheric shape as long as a space is effectively provided in such a way that the space allows metal deformed by pressing to move. To determine an optimum shape and size of the recess 5, it is effective to use the deformation analysis based on simulation by the finite element method, for example. Moreover, the projection 3 may be formed by a cylindrical body, so that a hole of the cylindrical body constitutes the recess 5. In the above embodiments, die casting aluminum alloy is used as material of the projection 3. However, other material may be used as long as the material has a low strength against compressive deformation, wherein the present invention is still effective. It is preferable to apply a lubricating material such as Vaseline onto the top end face (upper face) of the projection 3 so as to decrease a coefficient of friction between the upper face of the projection 3 and the pressing machine. Thereby, deformation of the end face of the projection 3 is suppressed with the pressing machine, which can prevent breaking of the lateral face and can lead to a caulking operation having high prevention effectiveness against fracture.

Although the above-stated embodiment describes the method for installing the oil separation plate 2 on the end plate 1 in the compressor, the method may be applied to various equipment other than the compressor. Particularly, for an example of other application than the compressor, the present method may be used as a method for installing a plate member on a supporting base plate having projections made of die casting aluminum alloy. In this case, the supporting base plate corresponds to the end plate 1 of the compressor having projections 3 shown in Fig. 1. Also, the plate member corresponds to the oil separation plate 2 of the compressor having through holes 4. Given that the plate installation method is described with reference to Fig. 1, firstly a plate member (the oil separation plate 2) is mounted on a supporting base plate (the end plate 1). Secondly projections (having a recess on its upper face) 3 are fitted into through holes provided in the plate member (oil separation plate 2). Thirdly, projected parts of the projections 3, which project from the through holes 4, are crashed, as a portion of the recess 5 remains, by pressing the projected parts downward so as to integrate the plate member (the oil separation plate 2) with the supporting base plate (the end plate 1). Thus, the plate installation method can prevent the projection 3 from being fractured by crushing even if the projection 3 is made of die casting aluminum alloy. This allows reduction in labor and cost during installation of the plate member. Further, it becomes possible to prevent such a quality trouble that the fracture of the projection 3 cannot be found out in the installation step and the damage of the projection progresses to cause the plate member to come off after components (various components having the supporting base plate and other plate members in an integrated state) are brought to the commercial state, and therefore it becomes possible to enhance the reliability of the components. Furthermore, the remaining recess space can further ensure the fracture prevention of the projection 3. It is also possible to enhance the product reliability by preventing quality troubles such as coming-off of a projection after commercialization of products (i.e. various kinds of products each having a supporting base plate integrated with a plate member). Further, remaining a space in the recess 5 makes it possible to more reliably prevent the projection 3 from being fractured.

## Claims

1. A compressor, comprising:
a closed container (10);
a compressor element section (14) housed in a lower portion of the closed container (10); and
an electric motor element section (15) housed in an upper portion of the closed container (10), wherein
the electric motor element section (15) has:
a rotor (25)
a stator (26) disposed on an outer periphery of the rotor (25);
an end plate (1) provided on an end surface of the rotor (25); and
an oil separation plate (2) installed on the end plate (1), wherein
the end plate (1) has:
a main section (50); and
a projection (3) projecting from the main section (50), and wherein
the oil separation plate (2) has
a through hole (4) in which the projection (3) is fitted, wherein
the projection (3) has:
a projected part which is projected from the through hole (4) of the oil separation plate (2) and is crushed to integrate the oil separation plate (2) with the end plate (1); and
**characterized in that** said projection (3) has a recess (5) on an upper face of the projection (3), wherein
a material of the projection (3) is die casting aluminum alloy,
the recess (5) on the projection (3) prior to its crushing is shaped into a cone whose diameter gradually decreases downward over the entire depth of the recess (5), and
the projection (3) is partly crushed to remain a portion of the recess.

## Patentansprüche

1. Kompressor, umfassend:
einen geschlossenen Behälter (10);
einen Kompressorelementabschnitt (14), der in einem unteren Bereich des geschlossenen Behälters (10) aufgenommen ist; und
einen Elektromotorelementabschnitt (15), der in einem oberen Bereich des geschlossenen Behälters (10) aufgenommen ist, wobei der Elektromotorelementabschnitt (15) aufweist:
einen Rotor (25),
einen Stator (26), der an einem äußeren Umfang des Rotors (25) angeordnet ist;
eine Endplatte (1), die an einer stirnseitigen Oberfläche des Rotors (25) angeordnet ist; und
eine Ölabscheiderplatte (2), die auf der Endplatte (1) angebracht ist, wobei die Endplatte (1) aufweist;
einen Hauptabschnitt (50) und
einen Vorsprung (3), der von dem Hauptabschnitt (50) vorspringt, und wobei die Ölabscheiderplatte (2) eine durchgehende Öffnung (4) aufweist, in die der Vorsprung (3) eingepasst ist, wobei der Vorsprung (3) aufweist:
einen vorspringenden Teil, der von der durchgehenden Öffnung (4) der Ölabscheiderplatte (2) vorsteht und zusammengedrückt ist, um die Ölabscheiderplatte (2) mit der Endplatte (1) integral zu verbinden; und
**dadurch gekennzeichnet, dass** der genannte Vorsprung (3) eine Vertiefung (5) auf einer Oberseite des Vorsprungs (3) aufweist, wobei das Material des Vorsprungs (3) eine form gegossene Aluminiumlegierung ist, die Vertiefung (5) auf dem Vorsprung (3) vor dessen Zusammendrücken in Form eines Konus geformt ist, dessen Durchmesser über die gesamte Tiefe der Vertiefung (5) allmählich nach unten hin abnimmt, und wobei der Vorsprung (3) teilweise zusammengedrückt ist, so dass ein Teil der Vertiefung verbleibt.

## Revendications

1. Compresseur, comprenant :
un contenant fermé (10);
une section d'élément compresseur (14) logée dans une partie inférieure du contenant fermé (10); et
une section d'élément moteur électrique (15) logée dans une partie supérieure du contenant fermé (10), où
la section d'élément moteur électrique (15) a :
un rotor (25)
un stator (26) disposé sur une périphérie extérieure du rotor (25);
une plaque d'extrémité (1) pourvue sur une surface d'extrémité du rotor (25); et
une plaque de séparation d'huile (2) installée sur la plaque d'extrémité (1), où
la plaque d'extrémité (1) a :
une section principale (50); et
une projection (3) faisant saillie à partir de la section principale (50), et où
la plaque de séparation d'huile (2) a
un trou traversant (4) dans lequel la projection (3) est adaptée, où
la projection (3) a :
une partie projetée qui est projetée à partir du trou traversant (4) de la plaque de séparation d'huile (2) et est écrasée de manière à intégrer la plaque de séparation d'huile (2) avec la plaque d'extrémité (1); et
**caractérisé en ce que** ladite projection (3) a
un évidement (5) sur une face supérieure de la projection (3) où
un matériau de la projection (3) est un alliage d'aluminium de coulée sous pression,
l'évidement (5) sur la projection (3) avant son écrasement est façonné dans un cône dont le diamètre diminue graduellement vers le bas, et sur toute la profondeur de l'évidement (5), et
la projection (3) est écrasée en partie pour faire partie de l'évidement.
